# EUROPEAN PATENT APPLICATION

(11) **EP 2 096 491 A2**
(43) Date of publication of application: **02.09.2009**
(21) Application number: 07832879.6
(22) Date of filing: 30.11.2007
(51) Int. Cl.: G02F 1/167

(54) **PARTICLES FOR DISPLAY MEDIUM**

(30) Priority: 04.12.2006 JP 2006327038
(71) Applicant: Bridgestone Corporation, Tokyo 104-8340 (JP)
(72) Inventor: MURATA, Kazuya, Kodaira-shi Tokyo 187-8531 (JP); OTA, Genichi, Tokyo 100-8246 (JP)
(74) Representative: Whalley, Kevin
(86) International application number: PCT/JP2007/073214
(87) International publication number: WO 2008/069140

(57) **Abstract**

As the particles for display media constituting the display media used for an information display panel, in which the display media are sealed between two substrates, at least one of two substrates being transparent, and, in which the display media, to which an electrostatic field is applied, are made to move so as to display information such as an image, use is made of the polymer particles having a substantially spherical shape, which contain binder resin, charge control resin and coloring agent, wherein a blending amount of monomer with charged functional group is 0.3 - 50 mol % in a raw material monomer constituting the charge control resin. According to the invention, it is possible to obtain the particles for display media having a high heat resistance and an excellent charge amount necessary for maintaining a display quality.

## Description

### TECHNICAL FIELD

The present invention relates to the particles for display media constituting the display media used for an information display panel, in which the display media are sealed between two substrates, at least one of two substrates being transparent, and, in which the display media, to which an electrostatic field is applied, are made to move so as to display information such as an image.

### RELATED ART

As an information display device substitutable for liquid crystal display (LCD), information display devices with the use of technology such as an electrophoresis method, an electro-chromic method, a thermal method, dichroic-particles-rotary method are proposed.

As for these information display devices, it is conceivable, as compared with LCD, as inexpensive visual display device of the next generation from a merit having wide field of vision close to normal printed matter, having smaller consumption, or having a memory function, and spreading out to a display for portable device and an electronic paper is expected. Recently, electrophoresis method is proposed that microencapsulate dispersion liquid made up with dispersion particles and coloration solution and dispose the liquid between faced substrates, and also it is expected.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed (for example, refer to non-patent literature 1). However, the structure becomes complicated because the charge transport layer and further a charge generation layer are to be arranged. In addition, it is difficult to constantly dissipate charges from the electro-conductive particles, and thus there is a drawback on the lack of stability during display rewriting.

As one method for overcoming the various problems mentioned above, an information display panel is known, in which the display media having optical reflectance and charge characteristics are sealed between two substrates, at least one substrate being transparent, and, in which the display media, to which an electrostatic field is applied, are made to move so as to display information such as an image. In the information display panel, in which the display media are moved by an electrostatic field so as to display information such as an image, since a particle diameter of the display media is about 1 - 50 µm, in order to make easy for the display media to have positively or negatively chargeable properties and to maintain a charge amount, use is made of acrylic resin, methacrylic resin and styrene resin as a binder resin for materials of the particles for display media.
As a producing method for such particles for the display media (hereinafter, sometimes called as particles), in order to make the process simple or to make the energy consumption low, or, in order to obtain directly the target particle diameter, it is effective to use a producing method utilizing a wet process in which powders are obtained by a polymerization as compared with a producing method utilizing a crushing process. Among wet processes, it is preferable to use a producing method utilizing a suspension polymerization.
In the case of using the producing method utilizing the suspension polymerization, it is general to use a method in which charge control agents are added. From the viewpoint of a dispersion stability in raw material monomer, the method of using charge control resins of monomer soluble type is often used as compared with the method of using charge control agents of monomer insoluble type. This charge control resins have generally a structure such that a raw material monomer of the soluble resin and a monomer with charged functional group are copolymerized with the binder resin of the particles for display media.

Non-patent literature 1: [Chou Kokurai, et al. The Imaging Society of Japan "Japan Hardcopy '99" (July 21-23, 1999) Transaction Pages 249-252]

### DISCLOSURE OF THE INVENTION

### TASKS TO BE SOLVED BY THE INVENTION

In the case of using the charge control resins in which copolymerization is performed by blending a large amount of monomer with charged functional group, it is effective for obtaining a predetermined charge amount. However, in the case of using for the suspension polymerization, there are drawbacks such that it becomes not to solve in monomer for the binder resin or such that a suspension stability is failed since it is dissolved to a water as suspension solution due to an effect of ionic charged functional group. On the other hand, in the case of using the charge control resins in which copolymerization is performed by blending a small amount of monomer with charged functional group, a large amount of charge control resins must be blended for obtaining a predetermined charge amount. In the case of blending a large amount of charge control resins are blended, it is difficult to maintain a heat resistance necessary for the particles for display media, due to an effect of the charge control resins having a heat plasticity which is disadvantageous for the heat resistance.

The present invention has for its object to provide particles for display media which obtain a good charge amount necessary for maintaining a display quality and obtain an excellent heat resistance, by setting a blending amount of monomer with charged functional group in raw material monomer constituting charge control resins within a range in which resolvability into the monomer for binder resins, suspension stability and heat resistance become preferable respectively.

### SOLUTION FOR THE TASK

In order to achieve the above object, according to the invention, particles or display media constituting the display media used for an information display panel, in which the display media are sealed between two substrates, at least one of two substrates being transparent, and, in which the display media, to which an electrostatic field is applied, are made to move so as to display information such as an image, comprises: polymer particles having a substantially spherical shape, which contain binder resin, charge control resin and coloring agent, wherein a blending amount of monomer with charged functional group is 0.3 - 50 mol % in a raw material monomer constituting the charge control resin.

As a preferable example of the particles for display media according to the invention, there are cases: such that as the monomer with charged functional group, use is made of monomer containing positively charged functional group such as amine or quaternary ammonium in molecule in the case of positive charging, and, use is made of monomer containing negatively charged functional group such as perfluoro-alkyl or sulfone acid in molecule in the case of negatively charging; such that monomer component of the binder resin constituting the monomer particles is an acrylic monomer; such that a glass transition temperature Tg of the binder resin constituting the particles for display media is not less than 60 °C, or, a glass transition temperature Tg of the binder resin constituting the particles for display media is not observed; such that an average volume particle diameter of the particles for display media is 1 - 50 µm; such that a charge amount of the particles for display media measured by a blow-off method utilizing carriers is 10 - 100 µC/g in an absolute value; and such that a color of the particles for display media is a white color and/or a black color.

### EFFECTS OF THE INVENTION

In the particles for display media according to the invention mentioned above, since the particles for display media constituting the display media used for an information display panel, in which the display media are sealed between two substrates, at least one of two substrates being transparent, and, in which the display media, to which an electrostatic field is applied, are made to move so as to display information such as an image, are polymer particles having a substantially spherical shape, which contain binder resin, charge control resin and coloring agent, wherein a blending amount of monomer with charged functional group is 0.3 - 50 mol % in a raw material monomer constituting the charge control resin, the particles for display media mentioned above obtain a good charge amount necessary for maintaining a display quality and obtain an excellent heat resistance, as demonstrated by the following

### examples.

### BRIEF DESCRIPTION OF THE DRAWINGS

[Fig. 1] Figs. 1a and 1b are schematic views respectively showing one embodiment of an information display panel which is an object of the present invention.
[Fig. 2] Figs. 2a and 2b are schematic views respectively illustrating another embodiment of an information display panel which is an object of the present invention.
[Fig. 3] Figs. 3a and 3b are schematic views respectively depicting still another embodiment of an information display panel which is an object of the present invention.
[Fig. 4] Fig. 4 is a scanning electron microscope (SEM) photograph showing micro concave/convex portions on a surface of polymer particles which is contained in the particles for display media according to the invention.
[Fig. 5] Fig. 5 is a schematic view illustrating one embodiment of partition shapes of an information display media which is an object of the present invention.

### BEST MODE FOR CARRYING OUT THE INVENTION

Hereinafter, best mode for carrying out the invention will be explained with reference to the drawings.

At first, a basic construction of an information display panel according to the present invention will be explained. In the information display panel used in the present invention, an electrostatic field is applied to display media sealed in the space between two opposed substrates. Along a direction of the applied electrostatic field by means of the force of the electrostatic field, Coulomb's force or the like, the charged display media are attracted and moved by varying a direction of electrostatic field. Accordingly, information such as an image or the like can be displayed. Therefore, it is necessary to design the information display panel in such a manner that the display media can move evenly and maintain stability during a reciprocal operation or during a reserving state. Here, as to forces applied to the particles constituting display media, there are an attraction force between the particles due to Coulomb' force, an imaging force with respect to the electrodes or substrates, an intermolecular force, a liquid bonding force, a gravity and the like.

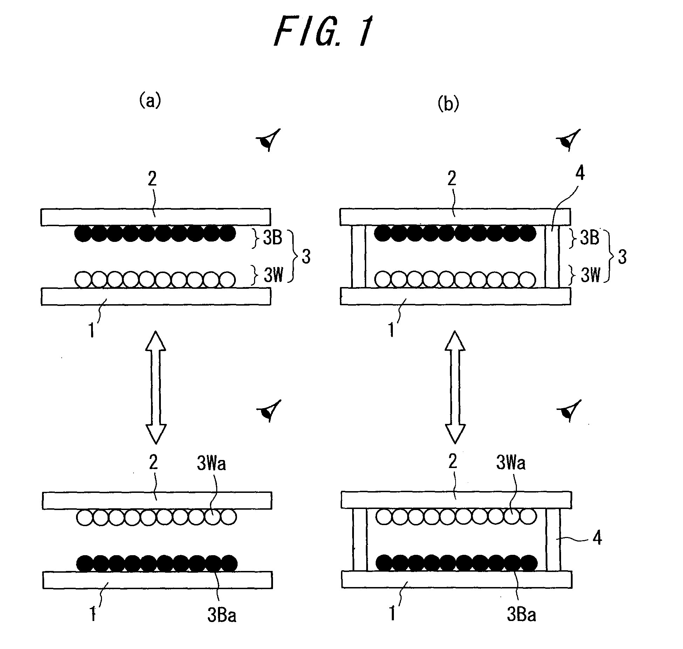

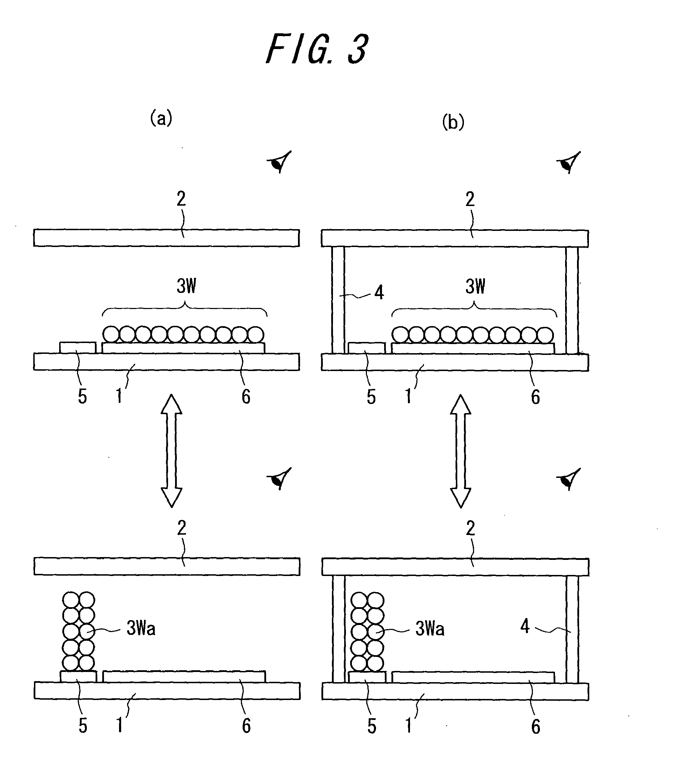

Examples of the information display panel that is a object of the invention will be explained with reference to Figs. 1a and 1b - Figs. 3a and 3b.

In the examples shown in Figs. 1a and 1b, at least two or more groups of display media 3 having different optical reflectance and different charge characteristics and consisting of at least one or more groups of particles (here, white color display media 3W made of the particles for white color display media 3Wa and black color display media 3B made of the particles for black color display media 3Ba are shown) are moved in a perpendicular direction with respect to substrates 1 and 2, in accordance with an electric field applied outside of the substrates 1 and 2, so as to display a black color by viewing the black color display media 3B to an observer or so as to display a white color by viewing the white color display media 3W to the observer. In the example shown in Fig. 1b, a cell is formed by arranging for example grid-like partition walls 4 between the substrates 1 and 2, in addition to the example shown in Fig. 1a. Moreover, in Fig. 1b, the partition walls arranged at the near side are omitted.

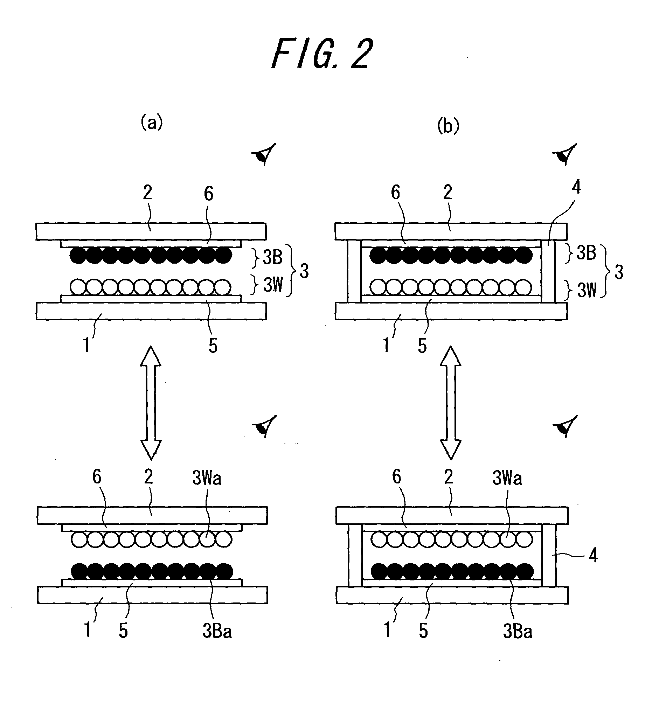

In the examples shown in Figs. 2a and 2b, at least two or more groups of display media 3 having different optical reflectance and different charge characteristics and consisting of at least one or more groups of particles (here, white color display media 3W made of the particles for white color display media 3Wa and black color display media 3B made of the particles for black color display media 3Ba are shown) are moved in a perpendicular direction with respect to substrates 1 and 2, in accordance with an electric field generated by applying a voltage between an electrode 5 arranged to the substrate 1 and an electrode 6 arranged to the substrate 2, so as to display a black color by viewing the black color display media 3B to an observer or so as to display a white color by viewing the white color display media 3W to the observer. In the example shown in Fig. 2b, a cell is formed by arranging for example grid-like partition walls 4 between the substrates 1 and 2, in addition to the example shown in Fig. 2a. Moreover, in Fig. 2b, the partition walls arranged at the near side are omitted.

In the examples shown in Figs. 3a and 3b, at least one group of display media 3 having optical reflectance and charge characteristic and consisting of at least one or more groups of particles (here, white color display media 3W made of the particles for white color display media) are moved in a parallel direction with respect to substrates 1 and 2, in accordance with an electric field generated by applying a voltage between the electrode 5 arranged to the substrate 1 and the electrode 6 arranged to the substrate 1, so as to display a white color by viewing the white color display media 3W to an observer or so as to display a color of the electrode 6 or the substrate 1 by viewing a color of the electrode 6 or the substrate 1 to the observer. In the example shown in Fig. 3b, a cell is formed by arranging for example grid-like partition walls 4 between the substrates 1 and 2, in addition to the example shown in Fig. 3a. Moreover, in Fig. 3b, the partition walls arranged at the near side are omitted.

Hereinafter, the particles for display media, which are the feature of the invention, will be explained in detail. The particles for display media according to the invention can be applied to the information display panel having the constructions shown in Figs. 1a, 1b - Figs. 3a, 3b, and they are sealed between two substrates (at least one substrate is transparent) as the display media in the information display panel mentioned above. The particles for display media according to the invention (hereinafter, sometimes called as particles) are used in such a manner that the display media are constituted by only the particles for display media or in such a manner that the display media are constituted by mixing them with another particles.

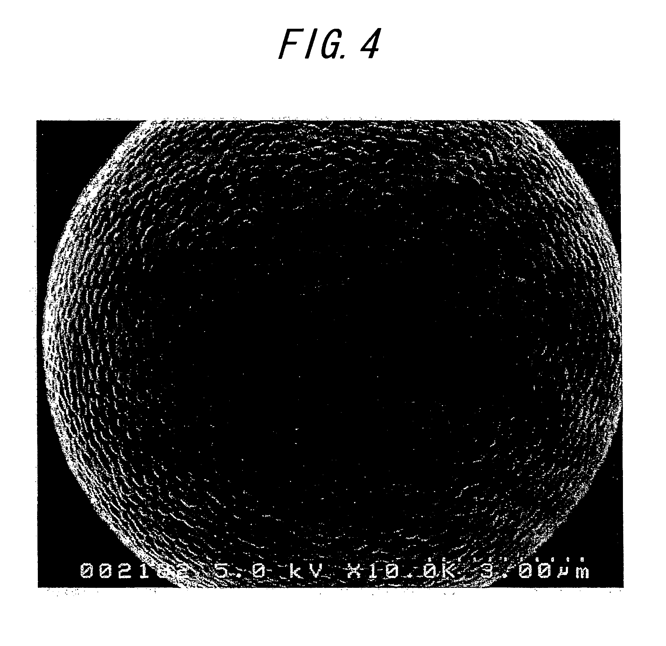

The particles for display media according to the invention are polymer particles, to which external additives are added or adhered according to need. The polymer particles used for the particles for display media according to the invention are the particles having a substantially spherical shape including binder resins, charge control resins and coloring agents, to which another charge control agents and additives may be added according to need. Moreover, the polymer particles mentioned above have micro concave/convex portions evenly on its surface. Fig. 4 is a scanning electron microscope (SEM) photograph showing micro concave/convex portions on a surface of polymer particles.

In the present invention, the polymer particles used for the particles for display media can be produced by a wet process. As to the wet process, use may be made of emulsion polymerization method, suspension polymerization method and so on. Among them, it is preferable to use the suspension polymerization method since a shape of the particles can be made spherical with relatively little effort.

As to the binder resins, use is made of resins used conventionally as the binder resins for the toner. For example, use may be made of: styrene and its derivative substitution polymer such as polystyrene, polyvinyl toluene and so on; styrene copolymer such as styrene - methyl acrylate copolymer, styrene - ethyl crylate copolymer, styrene butyl crylate copolymer, styrene - 2 - ethylhexyl acrylate copolymer, styrene - methyl methacrylate copolymer, styrene - ethyl methacrylate copolymer, styrene - buthyl methacrylate copolymer, styrene - butadiene copolymer and so on; and hydrogen additives such as polymethacrylate, polyester, epoxy resin, polyvinyl butyral, fatty acid or fatty series hydrocarbon resin, polyolefin, (metha) acrylate resin, norbornene series resin, styrene series resin.

As to the coloring agents, it is possible to use various dyes and pigments of organic or inorganic types.
As black coloring agents, use may be made of iron oxide powders such as carbon black, titanium black, iron zinc oxide, iron nickel oxide and so on, and, dyes or pigments such as oil black and so on.

As the blue coloring agents, use may be made of copper phthalocyanine compound and its derivatives, anthraquinone compound and so on. Specifically, examples of blue coloring agents include C.I. pigment blue 1, 7, 15:1, 15:2, 15:3, 15:4, 60, 62, 66 and so on.

As yellow coloring agents and red coloring agents, use may be made of compounds such as azo series pigments such as monoazo pigments, disazo pigments and so on, and, condensed polycyclic system pigments and so on.
Examples of the yellow coloring agents include C.I. pigment yellow 3, 12, 13, 14, 15, 17, 24, 60, 62, 65, 73, 74, 75, 83, 93, 97, 99, 100, 101, 104, 108, 117, 120, 123, 138, 139, 148, 150, 151, 154, 155, 156, 166, 169, 173, 176, 177, 179, 180, 181, 183, 185, 186, 191, 192, 193, 199, 213 and so on.

Examples of the red coloring agents include C.I. pigment red 2, 3,5, 6, 7, 23, 31, 48:2, 48:3, 48:4, 57:1, 58, 60, 63, 64, 68, 81:1, 83, 87, 88, 89, 90, 112, 114, 122, 144, 146, 150, 163, 166, 169, 170, 177, 184, 185, 187, 202, 206, 207, 209, 220, 221, 251, 254 and so on.
Examples of the green coloring agents include chrome green, chromium oxide, pigment green B, C.I. pigment green 7,Malachite green lake, and final yellow green G.
Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.
Examples of purple pigments include manganese purple, first violet B, and methyl violet lake.
Examples of white pigments include zinc white, titanium oxide, antimony white, and zinc sulphide.
An amount of respective coloring agents is 1 - 10 parts by weights preferably with respect to 100 parts by weights of the binder resins.

These pigments may be used respectively or may be used by combining them with each other. Among them, it is preferred to use carbon black as the black pigments and to use titanium oxide as the white pigments. Moreover, it is possible to produce the particles for display media having a desired color by blending the coloring agents mentioned above.

In the present invention, it is preferred that the polymer particles include charge control agents. In the case of producing the particles for display media having a negative charge property, use is mainly made of negative charge control agents, and, in the case of producing the particles for display media having a positive charge property, use is mainly made of positive charge control agents.

As the positive charge control agents, use may be made of charge control resins such as polyamine resin, copolymer containing the third grade amino group, copolymer containing the fourth grade ammonium salt and so on; imidazole compound, nigrosine dye, the fourth grade ammonium salt, triamino triphenylmethane compound and so on.

As the negative charge control agents, use may be made of charge control resins such as copolymer containing sulfonate group, sulfonate-containing copolymer, copolymer containing carboxylic acid group, carboxylate-containing copolymer, metal-containing azo dyes including Cr, Co, Al, Fe and so on, salicylic acid metal complex, salicylic acid metal complex, alkyl salicylic acid metal oxide and so on.

Among the charge control agents mentioned above, it is preferable to use the charge control resins. Moreover, as the charge control resins, it is preferable to set an amount of functional group which provide charge property to 0.3 - 50 mol% more preferably 5 - 50 mol%.
As to an amount of charge control agents, it is preferable to set an amount of the charge control agents to 0.01 - 30 parts by weight more preferably 0.02 - 20 parts by weight with respect to 100 parts by weight of the binder resins. Specifically, in the case of using the charge control resins, it is preferable to set an amount of the charge control resins to 0.01 - 30 parts by weight more preferably 0.03 - 20 parts by weight with respect to 100 parts by weight of the binder resins.

### (1) Polymerizable monomer composition

The suspension polymerization, which is preferable for a method of producing polymer particles, is performed according to the following processes. First, the polymerizable monomer composition is prepared by mixing polymerizable monomer and coloring agents mentioned below, and another additives according to need. After the polymerizable monomer composition is immersed into a water solvent including dispersion stabilizer, a polymerization initiator is further added to form a liquid droplet. After that, a polymerization is performed to obtain water dispersions of the polymer particles. The water dispersions are further subjected to washing, dewatering and drying processes to obtain dried polymer particles. The dried polymer particles are subjected to a classifying process according to need, and then external additives are added according to need to obtain the particles for display media.

The polymerizable monomer means a chemical compound wherein a polymerization process can be performed, and examples of the polymerizable monomer include monovinyl monomer, cross-linkable monomer and so on.
In the present invention, it is preferable to use monovinyl monomer as a main ingredient of the polymerizable monomer. Examples of the monovinyl monomer include styrene; styrene derivatives such as vinyl toluene, α-methylstyrene and so on; acrylic acid and methacrylic acid; acrylic ester such as methyl acrylate, ethyl acrylate, propyl acrylate, butyl acrylate, 2-ethylhexyl acrylate, dimethylaminoethyl acrylate and so on; methacrylic ester such as methyl methacrylate, ethyl methacrylate, propyl methacrylate, butyl methacrylate, 2-ethylhexyl methacrylate, dimethylaminoethyl methacrylate and so on; acrylic acid derivatives such as acrylamide, methacrylamide and so on; methacrylic acid derivatives; and olefin such as ethylene, propylene, butylene and so on. These monovinyl monomers can be used respectively or can be used by combining them with each other. Among them, as the monovinyl monomers, it is preferable to use styrene and styrene derivatives and more preferable to use styrene.

The cross-linkable monomer means monomer having two or more functional groups wherein a polymerization process can be performed. Example of the cross-linkable monomer include aromatic divinyl compound such as divinylbenzen, divinylnaphthalene, their derivatives and so on; unsaturated carboxylic ester compound of dihydric alcohol such as ethylene glycol methacrylate, diethylene glycol methacrylate, 1, 4 - butanediole diacrylate and so on; chemical compounds having three or more vinyl groups such as another divinyl compound such as N-divinyl aniline, divinyl ether and so on, trimethylol propane trimethacrylate, dimethylol propane tetraacrylate and so on. Among them, it is preferable to use unsaturated carboxylic ester compound of dihydric alcohol. The cross-linkable monomers can be used respectively or can be used by combining them with each other.

In the present invention, it is preferable to use both of the monovinyl monomer and the cross-linkable monomer and it is more preferable to set a weight ratio of monovinyl monomer : cross-linkable monomer to 85:15 - 35:65.

### (2) Liquid droplet formation

In the present invention, the polumerizable monomer compositions obtained according to the method mentioned above are dispersed in a water solvent including a dispersion stabilizer, and a polymerization initiator is added therein. After that, a liquid droplet formation of the polymerizable monomer compositions is performed. A method of forming the liquid droplets is not limited. For example, use may be made of an apparatus which can perform a strong agitation such as an inline-type emulsifying dispersion apparatus (EBARA CORPORATION, produce name: Milder), a high-speed emulsifier/disperser (PRIMIX Corporation, produce name: T.K. HOMO MIXER MARK II) and so on.

In the present invention, the dispersion stabilizer is added in the water solvent. For example, examples of the dispersion stabilizers include organic compounds such as: sulfate such as barium sulfate, calcium sulfate and so on; carbonate such as barium carbonate, calcium carbonate, magnesium carbonate and so on; phosphate such as calcium phosphate and so on; metal oxide such as aluminum chloride, titanium oxide and so on; metal hydroxide such as aluminum hydroxide, magnesium hydroxide, ferric hydroxide and so on, and, water-soluble polymer such as polyvinyl alcohol, methylcellulose, gelatin and so on; anionic surfactants ; nonionic surfactants; amphoteric surfactants; and so on. The dispersion stabilizers can be used respectively or can be used by combining two or more stabilizers.

Among the dispersion stabilizers mentioned above, since the dispersion stabilizers including metal compounds especially insoluble colloid of metal hydroxide can make a particle diameter distribution of the polymer particles narrow, an effect for circumstances is small. Therefore, it is preferably used.

As the polymerization initiator, use is made of persulfate such as potassium peroxide, ammonium peroxide and so on; azo compounds such as 4,4' - azobis (4-cyanovaleric acid), 2,2 - azobis (2-methyl-N-(2-hydroxyethyl)) propion amide, 2,2' - azobis (2-amidino propane) dihydro chloride, 2,2' - azobis (2,4-dimethyl valeronytril), 2,2' - azobis isobutyionytril; and organic peroxide such as di-t-butylperoxide, benzoilperoxide, t-butylperoxy-2-ethylhexanoate, t-butylperoxy-2-ethylbutanoate, t-hexylperoxy-2-ethylhexanoate, t-butyl peroxypivarate, di-isopropyl peroxydicarbonate, di-t-butyl peroxyisophthalate, t-butyl peroxyisobutylate and so on. Among them, it is preferable to use organic peroxide more preferably organic peroxide ester compound (peroxyester), since it can decrease residual polymerizable monomer.

As to an amount of the polymerization initiator used for a polymerization of the polymerizable monomer composite, it is generally set to 0.1 - 20 parts by weight, preferably set to 0.3 - 15 parts by weight and more preferably set to 1.0 - 10 parts by weight, with respect to 100 parts by weight of total of the hydrocarbon series monomer and the cross-linkable monomer.

### (3) Polymerization

After the liquid droplet formation is performed as mentioned above, the obtained water solvent is heated and the polymerization is initiated to obtain a water dispersion of the polymer particles. Further, the obtained water dispersion may be subjected to a process for removing a volatile component remaining in the polymer particles by means of various known methods.
As to a polymerization temperature of the polymerizable monomer composition, it is preferably set to not less than 50 °C, and more preferably set to 60 - 95 °C. Moreover, as to a reaction period, it is preferably set to 1 - 20 hours and more preferably set to 2 - 15 hours.

### (4) Filtering, washing, dewatering and drying

The water dispersions of the polymer particles obtained by the polymerization are subjected after polymerization to filtering process, washing process for removing the dispersion stabilizers, dewatering process and drying process as is the same as the known processes to obtain the polymer particles by means of the polymerization method.

In the case of using inorganic compounds such as inorganic hydroxide as the dispersion initiator, as to the washing method mentioned above, it is preferable to use a method in which the dispersion stabilizers are removed by dissolving them into a water by means of an addition of acid or alkali into the water dispersions of the polymer particles. In the case of using colloid of poorly water soluble inorganic hydroxide, as the dispersion stabilizers, it is preferable to control pH of the water dispersions of the polymer particles in a range not greater than 6.5. As the acid to be added, use may be made of inorganic acids such as sulfuric acid, hydrochloric acid, nitric acid and so on, or, organic acids such as formic acid, acetic acid and so on. Among them, it is especially preferable to use sulfuric acid since it has a large removing efficiency and a small burden for a production equipment.

As to the methods of dewatering and filtering, use may be made of various known methods, and it is not especially limited. Examples of these methods include centrifugal filtering method, vacuum filtering method, pressure filtering method and so on. Moreover, as to the method of drying, it is not especially limited also, and various methods can be used.

An average volume particle diameter (Dv) of the polymer particles as the particles for display media according to the invention is generally 1 - 50 µm, preferably 3 - 20 µm and more preferably 5 - 15 µm. If the volume average particle diameter exceeds an upper limit of the range mentioned above, a sharpness of displaying becomes sometimes deteriorated. Contrary to this, if the volume average particle diameter is less than a lower limit of the range mentioned above, an aggregation power between particles becomes too large, and it becomes sometimes an obstacle for the movement as the particles for display media.

Moreover, a ratio (Dv/Dp) between the volume average particle diameter (Dv) and a number average particle diameter (Dp) is preferably 1.00 - 1.30 and more preferably 1.00 - 1.20. If a value of Dv/Dp lies within the range mentioned above, the movement as the particles for display media becomes even, and thus it is preferred.

As to the polymer particles used as the particles for display media according to the invention, it is preferable to use the polymer particles having a sphericity (Sc/Sr) of 1.00 - 1.30, and it is more preferable to use the polymer particles having a sphericity (Sc/Sr) of 1.00 - 1.20. If the sphericity (Sc/Sr) exceeds 1.30, a fluidity of the display media constituted by the particles for display media becomes lowered, and thus it becomes sometimes an obstacle for the movement as the particles for display media. The sphericity (Sc/Sr) of the polymer particles can be measured as mentioned below. An image of the polymer particles is taken by an electron microscope, and an image processing of the taken image is performed by an image processing apparatus (Nireco Corporation, produce name: LUZEX IID) under such a condition that a particle area fraction with respect to a frame area is up to 2% and a total processing number is 100. The sphericity (Sc/Sr) of the polymer particles can be obtained by averaging the measured values of the sphericity (Sc/Sr) of 100 polymer particles. It should be noted that, in the above explanations,
Sc: Area of circle in which an absolute maximum length of the polymer particles is assumed to be a diameter, and
Sr: Substantial project area of the polymer particles.

### (5) External additives

In order to control a fluidity and so on for display media, the external additives may be contained or adhere to the particles for display media. In this case, the polymer particles are covered (adhere) with the external additives by mixing/agitating the polymer particles and the external additives by means of a high-speed agitation. Examples of the high-speed agitators include Henschel Mixer (produce name, Mitsui Mining Co., Ltd.), Super Mixer (produce name, KAWATA MFG Co., Ltd.), Q Mixer (produce name, Mitsui Mining Co., Ltd.), Mechanofusion System (produce name, HOSOKAWA MICRON CORPORATION), MECHANOMILL (produce name, OKADA SEIKO CO., LTD.).

As to the external additives, it is preferable to use fine particles having a number average primary particle diameter of 5 - 500 nm. Examples of the external additives include: inorganic fine particles such as silica, titanium oxide, aluminum oxide, zinc oxide, tin oxide, calcium carbonate, calcium phosphate, cerium oxide and so on; and organic resin particles such as methacrylate ester polymer, acrylic ester polymer, styrene - methacrylate ester copolymer, styrene - acrylic ester copolymer, melamine resin, particles of core-shell type in which core is styrene polymer and shell is methacrylate ester polymer, and so on.
An amount of the external additives is generally 0.1 - 10 parts by weight and preferably 0.5 - 6 parts by weight, with respect to 100 parts by weight of the polymer particles.

As to the particles for display media according to the invention, use is made of polymer particles having a substantially spherical shape, which contain binder resin, charge control resin and coloring agent, wherein a blending amount of monomer with charged functional group is 0.3 - 50 mol % in a raw material monomer constituting the charge control resin. As the monomer with charged functional group, use is made of monomer containing positively charged functional group such as amine or quaternary ammonium in molecule in the case of positive charging, and, use is made of monomer containing negatively charged functional group such as perfluoro-alkyl or sulfone acid in molecule in the case of negatively charging.

Moreover, there are preferable cases: such that monomer component of the binder resin constituting the monomer particles is an acrylic monomer; such that a glass transition temperature Tg of the binder resin constituting the particles for display media is not less than 60 °C, or, a glass transition temperature Tg of the binder resin constituting the particles for display media is not observed; such that an average volume particle diameter of the particles for display media is 1 - 50 µm; such that a charge amount of the particles for display media measured by a blow-off method utilizing carriers is 5 - 80 µC/g in an absolute value; and such that a color of the particles for display media is a white color and/or a black color.

In the particles for display media according to the invention, since the particles for display media used for the information display panels shown in Figs. 1a, 1b - Figs. 3a, 3b are made of polymer particles having a substantially spherical shape, which contain binder resin, charge control resin and coloring agent, wherein a blending amount of monomer with charged functional group is 0.3 - 50 mol % in a raw material monomer constituting the charge control resin, the particles for display media obtain a good charge amount necessary for maintaining a display quality and obtain an excellent heat resistance, as can be seen from the following embodiments. Moreover, since the information display panel using the particles for display media shown in Figs. 1a, 1b - Figs. 3a, 3b has an improved heat resistance and maintains a desired charge amount, excellent display quality can be obtained.

Hereinafter, respective members constituting the information display panel will be explained.

As the substrate, at least one of the substrates is the transparent substrate through which a color of the display media can be observed from outside of the panel, and it is preferred to use a material having a high transmission factor of visible light and an excellent heat resistance. The other substrate may be transparent or may be opaque. Examples of the substrate material include polymer sheets such as polyethylene terephthalate (PET), polyethylene naphthalate (PEN), polyethylene (PE), polycarbonate (PC), polyimide (PI), polyether sulfone or acryl and metal sheets having flexibility and inorganic sheets such as glass, quartz or so having no flexibility. The thickness of the substrate is preferably 2 to 5000 µm, more preferably 5 to 2000 µm. When the thickness is too thin, it becomes difficult to maintain strength and distance uniformity between the substrates, and when the thickness is thicker than 5000 µm, there is a drawback as a thin-type information display panel.

As a material of the electrode arranged to the substrate according to need, use is made of metals such as aluminum, silver, nickel, copper, gold, or, conductive metal oxides such as indium tin oxide (ITO), indium oxide, zinc-doped indium oxide (IZO), aluminum-doped zinc oxide (AZO), conductive tin oxide, antimony tin oxide (ATO), conductive zinc oxide and so on, or, conductive polymers such as polyaniline, polypyrrole, polythiophene and so on, and they are used by being suitably selected. As an electrode forming method, use is made of a method in which the materials mentioned above are made to a thin film to perform pattering by means of sputtering method, vacuum vapor deposition method, CVD (chemical vapor deposition) method, coating method and so on, or, a method in which conductive materials and solvents are mixed with synthetic resin binder and the mixture is sprayed to perform pattering. A transparency is necessary for the electrode arranged to the substrate at an observation side (display surface side), but it is not necessary for the electrode arranged to the substrate at a rear side. In both cases, the materials mentioned above, which are conductive and have a pattern formation capability, can be suitably used. Additionally, the thickness of the electrode may be suitable unless the electro-conductivity is absent or any hindrance exists in optical transparency, and it is preferable to be 0.01 to 10 µm, more preferable to be 0.05 to 5 µm. The material and the thickness of the electrode arranged to the rear substrate are the same as those of the electrode arranged to the substrate at the display side, but transparency is not necessary. In this case, the applied outer voltage may be superimposed with a direct current or an alternate current.

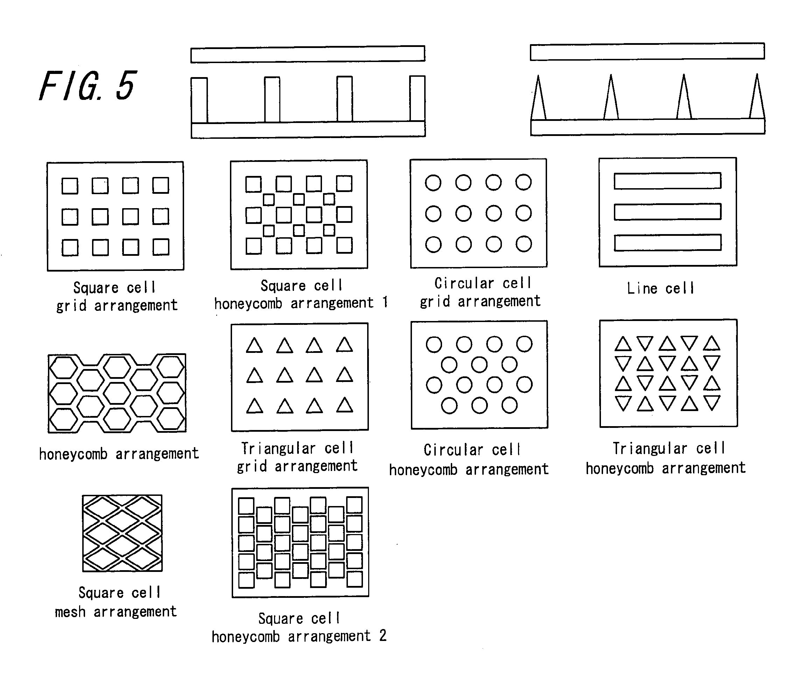

As the partition wall arranged to the substrate according to need, a shape of the partition wall is suitably designed in accordance with a kind of the display media used for the display and is not restricted. However, it is preferred to set a width of the partition wall to 2 - 100 µm more preferably 3 - 50 µm and to set a height of the partition wall to 10 - 500 µm more preferably 10 - 200 µm.
Moreover, as a method of forming the partition wall, use may be made of a double rib method wherein ribs are formed on the opposed substrates 1, 2 respectively and they are connected with each other and a single rib method wherein a rib is formed on one of the opposed substrates only. The present invention may be preferably applied to both methods mentioned above.
The cell formed by the partition walls each made of rib has a square shape, a triangular shape, a line shape, a circular shape and a hexagon shape, and has an arrangement such as a grid, a honeycomb and a mesh, as shown in Fig. 5 viewed from a plane surface of the substrate. It is preferred that the portion corresponding to a cross section of the partition wall observed from the display side (an area of the frame portion of the cell) should be made as small as possible. In this case, a clearness of the image display can be improved.
The formation method of the partition wall is not particularly restricted, however, a die transfer method, a screen-printing method, a sandblast method, a photolithography method and an additive method may be preferably used for the information display panel according to the invention. Among them, it is preferred to use a photolithography method using a resist film or a die transfer method.

Although the method for charging the particles negatively or positively is not particularly limited, a corona discharge method, an electrode injection-charge method, a friction charge method and so on are employable. It is preferred that the particle measured by a blow-off method by using carriers has a charge amount of 5 - 80 µC/g in absolute value. When the absolute value of the charge amount of the particles is smaller than this range, the response speed in response to a deviation of the electrostatic field becomes slower and the memory characteristics become lower. When the absolute value of the charge amount of the particles is larger than this range, an imaging force to the substrate and electrode becomes too stronger. Therefore, the following ability at the inversion of its electric field becomes poor, but the memory characteristic is favorable.
In the invention, a charge amount measuring method is as follows.

### <Blow-off measuring theory and method>

In the blow-off method, a mixture of the particles and the carriers are placed into a cylindrical container with nets at both ends, and high-pressure gas is blown from the one end to separate the powders and the carriers, and then only the powders are blown off from the mesh of the net. In this occasion, charge amount of reverse blown polarity remains on the carriers with the same charge amount of the powders carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.
As a blow-off powder charge amount measuring instrument, TB-200 produced by Toshiba Chemical Co., Ltd. was used. In this invention, ferrite carriers are used for the charge amount measurement of the particles to be measured. However, when two groups of display media consisting of the display media constituted by positively chargeable particles and the display media constituted by negatively chargeable particles are mixed to be used in the information display panel, the same kind of carriers are used for measuring a charge amount of the particles for display media constituting respective display media. Specifically, use is made of DFC100 LINKL (ferrite including Mn-Mg) produced by DOWA IRON POWDER CO,. LTD. as the carriers, and a charge amount of the particles (µC/g) is measured. A mixing of the carriers and the particles are performed by shaking at 100 times by means of a shaking apparatus under the condition of amplitude of 10cm and frequency of 100 times/minute.

Because it is necessary for the particles to hold the charged electric charge, insulating particles with the volume specific resistance of 1×10¹⁰ Ω·cm or greater are preferable, and in particular, insulating particles with the volume specific resistance of 1×10¹² Ω·cm or greater are more preferable. Further, the particles with slow charge attenuation property evaluated by the measuring method below are more preferable.

Further, in the information display panel in which the display media constituted by the particles for display media are driven in an air space, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH.
The above gap means a gas portion surrounding the display media obtained by substituting the electrodes 5, 6 (in the case of arranging electrode inside of substrate), an occupied portion of the display media 3, an occupied portion of the partition walls 4 (in the case of arranging partition walls) and a seal portion of the device from the space between the substrate 1 and the substrate 2 for example in Figs. 1a and 1b - Figs. 3a and 3b.
A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the display media and assembling the substrate under an atmosphere having a predetermined humidity and to apply a seal member and a seal method for preventing a humidity inclusion from outside of the device.

In the information display panel according to the invention, an interval between the substrates is not restricted if the display media can be moved and a contrast can be maintained, and it is adjusted normally to 10 - 500 µm, preferably 10 - 200 µm.
Moreover, it is preferred to control a volume occupied rate of the display media in a space between the opposed substrates to 5 - 70 %, more preferably 5 - 60 %. If the volume occupied rate of the display media exceeds 70 %, the display media become difficult to move, and if it is less than 5 %, a sufficient contrast cannot be obtained and a clear image display is not performed.

### EXAMPLES

Hereinafter, the present invention will be explained further specifically with reference to the examples according to the invention and the comparative examples, but the present invention is not limited to the following examples. In this case, the particles for display media according to the invention and the comparative examples including the charge control resins mentioned above were produced, and the estimation was performed according to the standard mentioned above.

### <Production of charge control resins (examples, comparative examples)>

As the charge control resins for positive charge, 100 parts by weight of polymerizable monomer including styrene 86.17 % (88.8 mol%), butyl acrylate 13.14 % (11.0 mol%) and N,N - diethyl - N - methyl - N - (2-methacryloyloxy) ethyl ammonium p - toluenesulfonate 0.69 % (0.2 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 1) was obtained. The obtained charge control resins for positive charge 1 has a weight-average molecular weight of 1.2 × 10⁴ and a glass transition temperature of 67 °C.
As the charge control resins for positive charge, 100 parts by weight of polymerizable monomer including styrene 85.86 % (88.7 mol%), butyl acrylate 13.10 % (11.0 mol%) and N,N - diethyl - N - methyl - N - (2-methacryloyloxy) ethyl ammonium p - toluenesulfonate 1.04 % (0.3 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 2) was obtained. The obtained charge control resins for positive charge 2 has a weight-average molecular weight of 1.1 × 10⁴ and a glass transition temperature of 66 °C.
As the charge control resins for positive charge, 100 parts by weight of polymerizable monomer including styrene 72.81 % (84.0 mol%), butyl acrylate 11.73 % (11.0 mol%) and N,N - diethyl - N - methyl - N - (2-methacryloyloxy) ethyl ammonium p - toluenesulfonate 15.46 % (5.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 3) was obtained. The obtained charge control resins for positive charge 3 has a weight-average molecular weight of 1.0 × 10⁴ and a glass transition temperature of 64 °C.
As the charge control resins for positive charge, 100 parts by weight of polymerizable monomer including styrene 38.39 % (64.0 mol%), butyl acrylate 8.12 % (11.0 mol%) and N,N - diethyl - N - methyl - N - (2-methacryloyloxy) ethyl ammonium p - toluenesulfonate 53.49 % (25.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 4) was obtained. The obtained charge control resins for positive charge 4 has a weight-average molecular weight of 1.0 × 10⁴ and a glass transition temperature of 63 °C.
As the charge control resins for positive charge, 100 parts by weight of polymerizable monomer including styrene 16.89 % (39.0 mol%), butyl acrylate 5.86 % (11.0 mol%) and N,N - diethyl - N - methyl - N - (2-methacryloyloxy) ethyl ammonium p - toluenesulfonate 77.25 % (50.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 5) was obtained. The obtained charge control resins for positive charge 5 has a weight-average molecular weight of 1.0 × 10⁴ and a glass transition temperature of 60 °C.
As the charge control resins for positive charge, 100 parts by weight of polymerizable monomer including styrene 13.95 % (34.0 mol%), butyl acrylate 5.55 % (11.0 mol%) and N,N - diethyl - N - methyl - N - (2-methacryloyloxy) ethyl ammonium p - toluenesulfonate 80.50 % (55.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 6) was obtained. The obtained charge control resins for positive charge 6 has a weight-average molecular weight of 1.0 × 10⁴ and a glass transition temperature of 60 °C.
As the charge control resins for positive charge, 100 parts by weight of polymerizable monomer including styrene 86.31 % (88.7 mol%), butyl acrylate 13.17 % (11.0 mol%) and diethylaminoethyl methacylate 0.52 % (0.3 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including the fourth grade ammonium salt (hereinafter, referred to charge control resins for positive charge 7) was obtained. The obtained charge control resins for positive charge 7 has a weight-average molecular weight of 1.1 × 10⁴ and a glass transition temperature of 66 °C.
As the charge control resins for negative charge, 100 parts by weight of polymerizable monomer including styrene 86.43 % (88.8 mol%), butyl acrylate 13.18 % (11.0 mol%) and 2 - acrylamide - 2 - methylpropanesulfonic acid 0.39 % (0.2 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 1) was obtained. The obtained charge control resins for negative charge 1 has a weight-average molecular weight of 1.4 × 10⁴ and a glass transition temperature of 67 °C.
As the charge control resins for negative charge, 100 parts by weight of polymerizable monomer including styrene 86.25 % (88.7 mol%), butyl acrylate 13.17 % (11.0 mol%) and 2 - acrylamide - 2 - methylpropanesulfonic acid 0.58 % (0.3 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 2) was obtained. The obtained charge control resins for negative charge 2 has a weight-average molecular weight of 1.4 × 10⁴ and a glass transition temperature of 66 °C.
As the charge control resins for negative charge, 100 parts by weight of polymerizable monomer including styrene 78.15 % (84.0 mol%), butyl acrylate 12.60 % (11.0 mol%) and 2 - acrylamide - 2 - methylpropanesulfonic acid 9.26 % (5 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 3) was obtained. The obtained charge control resins for negative charge 3 has a weight-average molecular weight of 1.3 × 10⁴ and a glass transition temperature of 64 °C.
As the charge control resins for negative charge, 100 parts by weight of polymerizable monomer including styrene 50.28 % (64.0 mol%), butyl acrylate 10.64 % (11.0 mol%) and 2 - acrylamide - 2 - methylpropanesulfonic acid 39.09 % (25.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 4) was obtained. The obtained charge control resins for negative charge 4 has a weight-average molecular weight of 1.2 × 10⁴ and a glass transition temperature of 63 °C.
As the charge control resins for negative charge, 100 parts by weight of polymerizable monomer including styrene 25.65 % (39.0 mol%), butyl acrylate 8.90 % (11.0 mol%) and 2 - acrylamide - 2 - methylpropanesulfonic acid 65.44 % (50.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 5) was obtained. The obtained charge control resins for negative charge 5 has a weight-average molecular weight of 1.2 × 10⁴ and a glass transition temperature of 62 °C.
As the charge control resins for negative charge, 100 parts by weight of polymerizable monomer including styrene 21.66 % (34.0 mol%), butyl acrylate 8.62 % (11.0 mol%) and 2 - acrylamide - 2 - methylpropanesulfonic acid 69.72 % (55.0 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 6) was obtained. The obtained charge control resins for negative charge 6 has a weight-average molecular weight of 1.2 × 10⁴ and a glass transition temperature of 62 °C.
As the charge control resins for negative charge, 100 parts by weight of polymerizable monomer including styrene 85.48 % (86.7 mol%), butyl acrylate 13.05 % (11.0 mol%) and 2 - acrylamide - 2 - methylpropanesulfonic acid 1.48 % (0.3 mol%) were injected in a mixing solvent of 500 parts by weight of toluene and 400 parts by weight of methanol and were reacted at 80 °C for 8 hours in the presence of 4 parts by weight of 2,2' - azobis dimethyl valeronytril.
After the reaction was finished, the solvent was distilled away and copolymer including sulfonic acid (hereinafter, referred to charge control resins for negative charge 7) was obtained. The obtained charge control resins for negative charge 7 has a weight-average molecular weight of 1.3 × 10⁴ and a glass transition temperature of 65 °C.

### <Comparative example 1>

85 parts by weight of styrene monomer, 15 parts by weight of ethylene glycol dimethacrylate, 6 parts by weight of carbon black (Mitsubishi Chemical Corporation, produce name "#25B") and the charge control resins for positive charge 1 were dispersed by a bead mill under room temperature to obtain a homogeneous polymerizable monomer composition.
Separately from the above, aqueous sodium hydroxide, in which 6.9 parts by weight of sodium hydroxide were dissolved into 50 parts by weight of ion-exchanged water, was agitated and gradually added into magnesium chloride solution to prepare colloid dispersion liquid of magnesium hydroxide.
The mixed solution of the polymerizable monomer composite was injected into the colloid dispersion liquid of magnesium hydroxide obtained in the manner as mentioned above, and the agitation was performed until the droplet became stable. Then, 3 parts by weight of polymerization initiator: t - butylperoxy - 2 - ethylhexanoate (NOF CORPORATION, produce name "PERBUTYL O") were added therein, and then the droplets of monomer mixture were formed by agitating in a highly sharing manner for 30 minutes by means of EBARAMILDER (EBARA CORPORATIN, produce name "MDN303V") rotated at 15,000 rpm.
The water dispersions of monomer mixture obtained in the manner as mentioned above were set in a reactor having agitation blades, and a temperature elevation was started and controlled in such a manner that a temperature was constant at 80 °C. After 80% of polymerization transformation rate was achieved, a temperature elevation was further performed and maintained at 90 °C for 4 hours. After that, the reactor was cooled to obtain water dispersions of coloring resin particles.
Sulfuric acid was added into the water dispersions of coloring resin particles obtained in the manner as mentioned above while agitating until pH became 6 so as to dissolve magnesium hydroxide on a surface of the coloring resin particles. Then, after water was separated by filtering, 500 parts by weight of ion-exchanged water were further added therein so as to form a slurry again and a water washing was performed. Then, the dewatering process and the water washing process were repeated at several times again, and the vacuum drying process was performed to obtain black particles 1 having an average volume particle diameter of 9.6 µm. The average volume particle diameter was measured by Mastersizer 2000 (Malvern Instruments Ltd.). In this case, a blending amount of the positively charged charge control resins 1 necessary for obtaining a charge amount (about + 40 µC/g) suitable as the particles for display media for the information display panel was 5 parts by weight. A glass transition temperature (Tg) of the binder resins only of the particles 1 was not observed due to a highly cross-linking state. A heat resistance test was performed with respect to the particles 1 after the particles 1 were maintained at 60 °C for one week. As a result, since a large amount of the charge control resins having a low heat resistance was blended therein, the particles were fused with each other.

### <Comparative example 2>

As the negatively charged particles, white particles 2 having an average volume particle diameter of 9.2 µm were obtained in the same manner as that of the particles 1 except that 6 parts by weight of carbon black (Mitsubishi Chemical Corporation, produce name "#25B") were changed to 80 parts by weight of titanium oxide (TIPAQUE CR50, ISHIHARA SANGYO KAISHA, LTD.) and the charge control resins for positive charge 1 were changed to the charge control resins for negative charge 1 with respect to the particles 1 mentioned above. The average volume particle diameter was measured by Mastersizer 2000 (Malvern Instruments Ltd.). In this case, a blending amount of the negatively charged charge control resins 1 necessary for obtaining a charge amount (about - 20 µC/g) suitable as the particles for display media for the information display panel was 6 parts by weight. A glass transition temperature (Tg) of the binder resins only of the particles 2 was not observed due to a highly cross-linking state. A heat resistance test was performed with respect to the particles 2 after the particles 1 were maintained at 60 °C for one week. As a result, since a large amount of the charge control resins having a low heat resistance was blended therein, the particles were fused with each other.

### <Comparative example 3>

As the positively charged particles, particles were tried to form in the same manner as that of the particles 1 except that the charge control resins for positive charge 1 were changed to the charge control resins for positive charge 6 with respect to the particles 1 mentioned above. However, since the charge control agents were dissolved in the suspension solvent and the suspension state became unstable, the particles were not obtained.

### <Comparative example 4>

As the negatively charged particles, particles were tried to form in the same manner as that of the particles 2 except that the charge control resins for negative charge 1 were changed to the charge control resins for positive charge 6 with respect to the particles 2 mentioned above. However, the charge control agents were not dissolved in the styrene monomer and became aggregates. As a result, a predetermined charge amount was not obtained if a large amount of the charge control agents were blended.

### <Example 1>

As the positively charged particles, black particles 3 having an average volume particle diameter of 9.3 µm were obtained in the same manner as that of the particles 1 except that the charge control resins for positive charge 1 were changed to the charge control resins for positive charge 2 with respect to the particles 1 mentioned above. The average volume particle diameter was measured by Mastersizer 2000 (Malvern Instruments Ltd.). In this case, a blending amount of the positively charged charge control resins 2 necessary for obtaining a charge amount (about + 40 µC/g) suitable as the particles for display media for the information display panel was 4.5 parts by weight. A glass transition temperature (Tg) of the binder resins only of the particles 3 was not observed due to a highly cross-linking state. A heat resistance test was performed with respect to the particles 3 after the particles 3 were maintained at 60 °C for one week. As a result, since the particles were not fused with each other, the particles having a high heat resistance and an excellent charge amount necessary for maintaining a display quality could be obtained.

### <Example 2>

As the negatively charged particles, white particles 4 having an average volume particle diameter of 9.5 µm were obtained in the same manner as that of the particles 2 except that the charge control resins for negative charge 1 were changed to the charge control resins for negative charge 2 with respect to the particles 2 mentioned above. The average volume particle diameter was measured by Mastersizer 2000 (Malvern Instruments Ltd.). In this case, a blending amount of the negatively charged charge control resins 2 necessary for obtaining a charge amount (about - 20 µC/g) suitable as the particles for display media for the information display panel was 4.8 parts by weight. A glass transition temperature (Tg) of the binder resins only of the particles 4 was not observed due to a highly cross-linking state. A heat resistance test was performed with respect to the particles 4 after the particles 4 were maintained at 60 °C for one week. As a result, since the particles were not fused with each other, the particles having a high heat resistance and an excellent charge amount necessary for maintaining a display quality could be obtained.

### <Example 3>

As the positively charged particles, black particles 5 having an average volume particle diameter of 9.0 µm were obtained in the same manner as that of the particles 1 except that the charge control resins for positive charge 1 were changed to the charge control resins for positive charge 3 with respect to the particles 1 mentioned above. The average volume particle diameter was measured by Mastersizer 2000 (Malvern Instruments Ltd.). In this case, a blending amount of the positively charged charge control resins 3 necessary for obtaining a charge amount (about + 40 µC/g) suitable as the particles for display media for the information display panel was 2.0 parts by weight. A glass transition temperature (Tg) of the binder resins only of the particles 5 was not observed due to a highly cross-linking state. A heat resistance test was performed with respect to the particles 5 after the particles 5 were maintained at 60 °C for one week. As a result, since the particles were not fused with each other, the particles having a high heat resistance and an excellent charge amount necessary for maintaining a display quality could be obtained.

### <Example 4>

As the negatively charged particles, particles 6 having an average volume particle diameter of 9.1 µm were obtained in the same manner as that of the particles 2 except that the charge control resins for negative charge 1 were changed to the charge control resins for negative charge 3 with respect to the particles 2 mentioned above. The average volume particle diameter was measured by Mastersizer 2000 (Malvern Instruments Ltd.). In this case, a blending amount of the negatively charged charge control resins 3 necessary for obtaining a charge amount (about - 20 µC/g) suitable as the particles for display media for the information display panel was 2.5 parts by weight. A glass transition temperature (Tg) of the binder resins only of the particles 6 was not observed due to a highly cross-linking state. A heat resistance test was performed with respect to the particles 6 after the particles 6 were maintained at 60 °C for one week. As a result, since the particles were not fused with each other, the particles having a high heat resistance and an excellent charge amount necessary for maintaining a display quality could be obtained.

### <Example 5>

As the positively charged particles, black particles 7 having an average volume particle diameter of 9.0 µm were obtained in the same manner as that of the particles 1 except that the charge control resins for positive charge 1 were changed to the charge control resins for positive charge 4 with respect to the particles 1 mentioned above. The average volume particle diameter was measured by Mastersizer 2000 (Malvern Instruments Ltd.). In this case, a blending amount of the positively charged charge control resins 5 necessary for obtaining a charge amount (about + 40 µC/g) suitable as the particles for display media for the information display panel was 0.8 parts by weight. A glass transition temperature (Tg) of the binder resins only of the particles 7 was not observed due to a highly cross-linking state. A heat resistance test was performed with respect to the particles 7 after the particles 7 were maintained at 60 °C for one week. As a result, since the particles were not fused with each other, the particles having a high heat resistance and an excellent charge amount necessary for maintaining a display quality could be obtained.

### <Example 6>

As the negatively charged particles, white particles 8 having an average volume particle diameter of 9.2 µm were obtained in the same manner as that of the particles 2 except that the charge control resins for negative charge 1 were changed to the charge control resins for negative charge 4 with respect to the particles 2 mentioned above. The average volume particle diameter was measured by Mastersizer 2000 (Malvern Instruments Ltd.). In this case, a blending amount of the negatively charged charge control resins 5 necessary for obtaining a charge amount (about - 20 µC/g) suitable as the particles for display media for the information display panel was 1.0 parts by weight. A glass transition temperature (Tg) of the binder resins only of the particles 8 was not observed due to a highly cross-linking state. A heat resistance test was performed with respect to the particles 8 after the particles 8 were maintained at 60 °C for one week. As a result, since the particles were not fused with each other, the particles having a high heat resistance and an excellent charge amount necessary for maintaining a display quality could be obtained.

### <Example 7>

As the positively charged particles, black particles 9 having an average volume particle diameter of 8.9 µm were obtained in the same manner as that of the particles 1 except that the charge control resins for positive charge 1 were changed to the charge control resins for positive charge 5 with respect to the particles 1 mentioned above. The average volume particle diameter was measured by Mastersizer 2000 (Malvern Instruments Ltd.). In this case, a blending amount of the positively charged charge control resins 5 necessary for obtaining a charge amount (about + 40 µC/g) suitable as the particles for display media for the information display panel was 0.3 parts by weight. A glass transition temperature (Tg) of the binder resins only of the particles 9 was not observed due to a highly cross-linking state. A heat resistance test was performed with respect to the particles 9 after the particles 9 were maintained at 60 °C for one week. As a result, since the particles were not fused with each other, the particles having a high heat resistance and an excellent charge amount necessary for maintaining a display quality could be obtained.

### <Example 8>

As the negatively charged particles, white particles 10 having an average volume particle diameter of 9.1 µm were obtained in the same manner as that of the particles 2 except that the charge control resins for negative charge 1 were changed to the charge control resins for negative charge 5 with respect to the particles 2 mentioned above. The average volume particle diameter was measured by Mastersizer 2000 (Malvern Instruments Ltd.). In this case, a blending amount of the negatively charged charge control resins 5 necessary for obtaining a charge amount (about - 20 µC/g) suitable as the particles for display media for the information display panel was 0.5 parts by weight. A glass transition temperature (Tg) of the binder resins only of the particles 10 was not observed due to a highly cross-linking state. A heat resistance test was performed with respect to the particles 10 after the particles 10 were maintained at 60 °C for one week. As a result, since the particles were not fused with each other, the particles having a high heat resistance and an excellent charge amount necessary for maintaining a display quality could be obtained.

### <Example 9>

As the positively charged particles, black particles 11 having an average volume particle diameter of 9.0 µm were obtained in the same manner as that of the particles 1 except that the charge control resins for positive charge 1 were changed to the charge control resins for positive charge 7 with respect to the particles 1 mentioned above. The average volume particle diameter was measured by Mastersizer 2000 (Malvern Instruments Ltd.). In this case, a blending amount of the positively charged charge control resins 5 necessary for obtaining a charge amount (about + 40 µC/g) suitable as the particles for display media for the information display panel was 3.2 parts by weight. A glass transition temperature (Tg) of the binder resins only of the particles 11 was not observed due to a highly cross-linking state. A heat resistance test was performed with respect to the particles 11 after the particles 11 were maintained at 60 °C for one week. As a result, since the particles were not fused with each other, the particles having a high heat resistance and an excellent charge amount necessary for maintaining a display quality could be obtained.

### <Example 10>

As the negatively charged particles, white particles 12 having an average volume particle diameter of 9.2 µm were obtained in the same manner as that of the particles 2 except that the charge control resins for negative charge 1 were changed to the charge control resins for negative charge 7 with respect to the particles 2 mentioned above. The average volume particle diameter was measured by Mastersizer 2000 (Malvern Instruments Ltd.). In this case, a blending amount of the negatively charged charge control resins 5 necessary for obtaining a charge amount (about - 20 µC/g) suitable as the particles for display media for the information display panel was 3.3 parts by weight. A glass transition temperature (Tg) of the binder resins only of the particles 12 was not observed due to a highly cross-linking state. A heat resistance test was performed with respect to the particles 12 after the particles 12 were maintained at 60 °C for one week. As a result, since the particles were not fused with each other, the particles having a high heat resistance and an excellent charge amount necessary for maintaining a display quality could be obtained.

### <Example 11>

As the positively charged particles, black particles 13 having an average volume particle diameter of 9.0 µm were obtained in the same manner as that of the particles 1 except that 15 parts by weight of ethylene glycol dimethacrylate were changed to 5 parts by weight, 10 parts by weight of butyl acrylate were further added and the charge control resins for positive charge 1 were changed to the charge control resins for positive charge 4 with respect to the particles 1 mentioned above. The average volume particle diameter was measured by Mastersizer 2000 (Malvern Instruments Ltd.). In this case, a blending amount of the positively charged charge control resins 5 necessary for obtaining a charge amount (about + 40 µC/g) suitable as the particles for display media for the information display panel was 0.8 parts by weight. A glass transition temperature (Tg) of the binder resins only of the particles 13 was not observed due to a highly cross-linking state. A heat resistance test was performed with respect to the particles 13 after the particles 13 were maintained at 60 °C for one week. As a result, since the particles were not fused with each other, the particles having a high heat resistance and an excellent charge amount necessary for maintaining a display quality could be obtained.

### <Example 12>

As the negatively charged particles, white particles 14 having an average volume particle diameter of 9.0 µm were obtained in the same manner as that of the particles 2 except that 15 parts by weight of ethylene glycol dimethacrylate were changed to 5 parts by weight, 10 parts by weight of butyl acrylate were further added and the charge control resins for negative charge 1 were changed to the charge control resins for negative charge 4 with respect to the particles 2 mentioned above. The average volume particle diameter was measured by Mastersizer 2000 (Malvern Instruments Ltd.). In this case, a blending amount of the negatively charged charge control resins 5 necessary for obtaining a charge amount (about - 20 µC/g) suitable as the particles for display media for the information display panel was 1.0 parts by weight. A glass transition temperature (Tg) of the binder resins only of the particles 14 was not observed due to a highly cross-linking state. A heat resistance test was performed with respect to the particles 14 after the particles 14 were maintained at 60 °C for one week. As a result, since the particles were not fused with each other, the particles having a high heat resistance and an excellent charge amount necessary for maintaining a display quality could be obtained.

### INDUSTRIAL APPLICABILITY

The display media formed by the particles for display media according to the invention are used preferably to the display unit for mobile equipment such as notebook personal computers, electric datebooks, handy information equipment called as PDA (Personal Digital Assistants), cellular phones, handy terminals and so on; to the electric paper such as electric books, electric newspapers, electric manual (instruction) and so on; to the bulletin boards such as signboards, posters, blackboards, whiteboards and so on; to the image display unit for electric calculator, home electric application products, auto supplies and so on; to the card display unit such as point cards, IC cards and so on; and to the display unit for electric advertisements, information boards, electric POP (Point of Presence, Point of Purchase advertising), electric price tags, electric shelf tags, electric musical score, RF-ID device and so on. In addition, they are also preferably used to the image display unit for various electronic equipments such as POS terminal, car navigation systems, clock and so on. As another use, they are preferably used to the information display panel in which information is rewrote by means of outer electric field generating means (generally called rewritable paper).

## Claims

1. Particles for display media constituting the display media used for an information display panel, in which the display media are sealed between two substrates, at least one of two substrates being transparent, and, in which the display media, to which an electrostatic field is applied, are made to move so as to display information such as an image, comprising: polymer particles having a substantially spherical shape, which contain binder resin, charge control resin and coloring agent, wherein a blending amount of monomer with charged functional group is 0.3 - 50 mol % in a raw material monomer constituting the charge control resin.

2. The particles for display media according to claim 1, wherein, as the monomer with charged functional group, use is made of monomer containing positively charged functional group such as amine or quaternary ammonium in molecule in the case of positive charging, and, use is made of monomer containing negatively charged functional group such as perfluoro-alkyl or sulfone acid in molecule in the case of negatively charging.

3. The particles for display media according to claim 1 or 2, wherein monomer component of the binder resin constituting the monomer particles is an acrylic monomer.

4. The particles for display media according to one of claims 1 to 3, wherein a glass transition temperature Tg of the binder resin constituting the particles for display media is not less than 60 °C, or, a glass transition temperature Tg of the binder resin constituting the particles for display media is not observed.

5. The particles for display media according to one of claims 1 to 4, wherein an average volume particle diameter of the particles for display media is 1 - 50 µm.

6. The particles for display media according to one of claims 1 - 5, wherein a charge amount of the particles for display media measured by a blow-off method utilizing carriers is 5 - 80 µC/g in an absolute value.

7. The particles for display media according to one of claims 1 - 6, wherein a color of the particles for display media is a white color and/or a black color.
